# EUROPEAN PATENT SPECIFICATION

(11) **EP 4 232 733 B1**
(45) Date of publication and mention of the grant of the patent: **24.12.2025**
(21) Application number: 21881816.9
(22) Date of filing: 23.09.2021
(51) Int. Cl.: F16L 23/08, F16L 23/04, F16L 33/04

(54) **CLAMP FOR PRE-ASSEMBLING AND CONNECTING CONDUITS HAVING CONNECTOR FLANGES**
KLEMME ZUM VORMONTIEREN UND VERBINDEN VON LEITUNGEN MIT VERBINDERFLANSCHEN
COLLIER DE SERRAGE DE PRÉ-ASSEMBLAGE ET DE RACCORDEMENT DE CONDUITS À BRIDES DE RACCORDEMENT

(30) Priority: 23.10.2020 CN 202011143804
(43) Date of publication of application: 30.08.2023
(73) Proprietor: Norma EJT (Changzhou) Co. Ltd., Changzhou, Jiangsu 213167 (CN)
(72) Inventor: TAO, Ye, Changzhou, Jiangsu 213167 (CN); HAO, Duggan, Changzhou, Jiangsu 213167 (CN)
(74) Representative: Patentanwälte Olbricht Buchhold Keulertz
(86) International application number: PCT/CN2021/119878
(87) International publication number: WO 2022/083397

(56) References cited:
- EP-A1- 3 205 919
- EP-A2- 0 872 677
- WO-A2-2008/102116
- WO-A2-2008/102116
- CN-A- 103 511 770
- DE-A1- 102008 017 874
- DE-U1- 202012 101 587
- FR-A1- 2 546 578
- US-A- 4 521 940

## Description

### Technical Field

The invention relates to a clamp for pre-assembling and connecting conduits having connector flanges.

### Background Art

Conduits having connector flanges may be assembled by using clamps. Such clamps connect the connector flanges of two conduits. The clamps comprise a clamp band, which extends around the flanges in an assembly state. Further, those clamps comprise a tightening device, which is configured to tighten the clamp band to the flanges. The tightening of the band also tightens the connection between the two conduits. For assembling the clamp to the conduits, the conduits are brought together such that their flanges contact and couple to each other. Furthermore, the side faces of those flanges have to be flush to each other. The clamp band is then arranged around those flanges and tightened to the flanges with the tightening device.

WO 2008/102116 A2 discloses a clamp for pre-assembling and connecting conduits having connector flanges.

Conventional clamps require two hands for assembly. However, if the operator requires one hand to hold the conduits in place, the operator only has one hand left for the assembly. This either results in difficulties in the assembly process or in the requirement of an additional operator to support the assembly of the clamp.

### Summary of Invention

### Technical Problem

There is the need to provide an improved clamp, which provides further support in the assembly process.

### Solution to Problem

### Technical Solution

The invention provides a clamp for preassembling and connecting conduits having connector flanges, the clamp comprising: a clamp band and a preassembly device; the clamp band comprising a first end portion with a first tightening head and a second end portion with a second tightening head; the preassembly device comprising a first locking member at the first end portion; wherein, in an open state of the clamp, the first tightening head and the second tightening head are spaced apart from each other by a gap, and in a preassembly state of the clamp, the first tightening head and the second tightening head are arranged closer to each other than in the open state and the clamp is configured to hold two connector flanges of conduits in position to each other; wherein the preassembly device further comprises an extension member with a second locking member being lockable to the first locking member in a snap-fit manner; wherein in the open state, the second locking member is unlocked from the first locking member, and in the preassembly state, the second locking member is fixed on the first locking member and locks the clamp in the preassembly state.

According to the invention, the clamp comprises a preassembly state in which the clamp holds two connector flanges of conduits in position to each other. This means the connector flanges will not move in relation to each other, when preassembled by the clamp in the preassembly state, wherein the tightening heads do not yet tighten the clamp. The preassembly device comprising the first and second locking member fixes the preassembly state. In the preassembly state, the second locking member can be fixed to the first locking member in a snap-fit manner. When the second locking member is fixed to the first locking member, the preassembly state is locked. Therefore, the clamp holds the two connector flanges of the conduits in position to each other without any further action of the operator.

The clamp further comprises an open state, in which a gap spaces apart the first tightening head from the second tightening head. This means that the gap is arranged between the first tightening head and the second tightening head. In the open state, the clamp can be arranged around connection flanges of two conduits to connect them. An operator only needs one hand for arranging the clamp. Furthermore, the operator can perform the transition from the open state to the preassembly state with one hand by bringing together the first tightening head and the second tightening head, i.e. by closing the gap. When transitioning from the open state to the preassembly state, the second locking member will lock on the first locking member in a snap-fit manner. Due to the locking in the snap-fit manner, the locking will be performed automatically when closing the clamp. Support from a second hand is not required. Since in the preassembly state, the clamp holds the conduits in position, the operator does not need to hold the conduits in position by himself. Thus, for tightening the clamp by using the tightening heads, the operator can use both hands. Therefore, a second operator is not required. Furthermore, the assembly process of the clamp is further simplified.

In an example, the extension member may at least partly bridge the gap from the second end portion towards the first end portion.

Since the extension member at least partly bridges the gap, the second end portion is arranged farer away from the first end portion than at least one portion of the extension member. Therefore, when bringing together the first tightening head and the second tightening head, the extension member will contact the first end portion before the second tightening head and the second end portion. The second locking member on the extension member therefore connect to the first end portion before the second end portion connects to the first end portion. Thus, the second locking member can be locked in a snap-fit manner to the first locking member more easily when transitioning the clamp from the open state to the preassembly state.

In a further example, the extension member may comprise a clip.

The clip further simplifies the locking between the second locking member and the first locking member in a snap-fit manner.

Furthermore, for example, the second locking member may be arranged on a free end section of the clip.

The free end section of the clip is opposite to the attached end section of the clip, which attaches to the second end portion of the clamp. The free end section is therefore the section of the extension member being closest to the first end portion of the clamp. By arranging the second locking member on the free end section of the clip, the second locking member will be as close as possible to the first end portion of the clamp in the open state. The transition from the open state to the preassembly state just requires little reduction of the gap between the first tightening head and the second tightening head for contact between the second locking member and the first locking member. Thus, preassembly of conduits having flanges with big diameters is simplified since.

In the preassembly state, for example, the second locking member may be immovably fixed to the first locking member in a direction to the first tightening head.

The second locking member will not be able to move in a direction, which would allow the clamp to leave the preassembly state and re-transition to the open state. The second locking element may only move in a direction, which further tightens the clamp band on the connector flanges.

According to the invention, the second locking member comprises a hook and the first locking member comprises at least one hole at the first end portion, wherein, in the preassembly state, the hook is hookable on the hole in a snap-fit manner.

Thus, a secure locking between the second locking member and the first locking member is provided.

Further, the first locking member may e.g. comprise a plurality of holes being arranged on the first end portion at different distances to the first tightening head.

By providing a plurality of holes for locking with the hook, the hook can be locked to different holes to adapt the clamp band to different sizes of connection flanges. The holes can be arranged in a line along the circumference of the clamp band. Thus, when transitioning the clamp from the open state to the assembly state, the hook may move along that line. The hook will then sequentially snap into the holes beginning with the hole, which is closest to the first tightening head. During the transition from the open state to the preassembly state, the hook will at first snap into the first hole along the first end portion. If the clamp band is not yet arranged around the connector flanges, the hook may detach from the first hole when further closing the clamp band. The hook will then snap into the next hole along the clamp band. This may be repeated until the hook snaps in the last hole or until the clamp band is arranged closely around the connector flanges.

In a further example, in the open state the first locking member may be spaced apart from the second locking member.

This simplifies assembling the clamp on connector flanges.

Furthermore, according to a further example, the clamp may be a V-clamp.

For example, the extension member may be fixed to the second end portion by welding or riveting.

The extension member is attached securely and easily to the second end portion of the clamp.

The clamp may further comprise a tightening state in a further example, in which the first tightening head is tightened to the second tightening head by a tensioning element.

The clamp can be transitioned from the preassembly state to the tightening state by tightening the first and second tightening head together. The tightening can be performed by using a tension element. The tension element may for example be a screw. Since the clamp will automatically transition from the open state of the preassembly state when arranging the clamp on connector flanges, a transition from the open state to the tightening state comprises the transition of the clamp to the preassembly state.

### Advantageous Effects of Invention

### Advantageous Effects

In the open state, the clamp can be arranged around connection flanges of two conduits to connect them. An operator only needs one hand for arranging the clamp. Furthermore, the operator can perform the transition from the open state to the preassembly state with one hand by bringing together the first tightening head and the second tightening head, i.e. by closing the gap. When transitioning from the open state to the preassembly state, the second locking member will lock on the first locking member in a snap-fit manner. Due to the locking in the snap-fit manner, the locking will be performed automatically when closing the clamp. Support from a second hand is not required. Since in the preassembly state, the clamp holds the conduits in position, the operator does not need to hold the conduits in position by himself. Thus, for tightening the clamp by using the tightening heads, the operator can use both hands. Therefore, a second operator is not required. Furthermore, the assembly process of the clamp is further simplified.

### Brief Description of Drawings

### Description of Drawings

The wording of the claims defines the invention. The following description of exemplary embodiments according to the figures provide further features, details and advantages of the invention.
Fig. 1shows the clamp in the open state.
Figs. 2a, b show the clamp in the open state being arranged on connector flanges.
Figs. 3a, b show the clamp in the preassembly state.

### Best Mode for Carrying out the Invention

### Best Mode

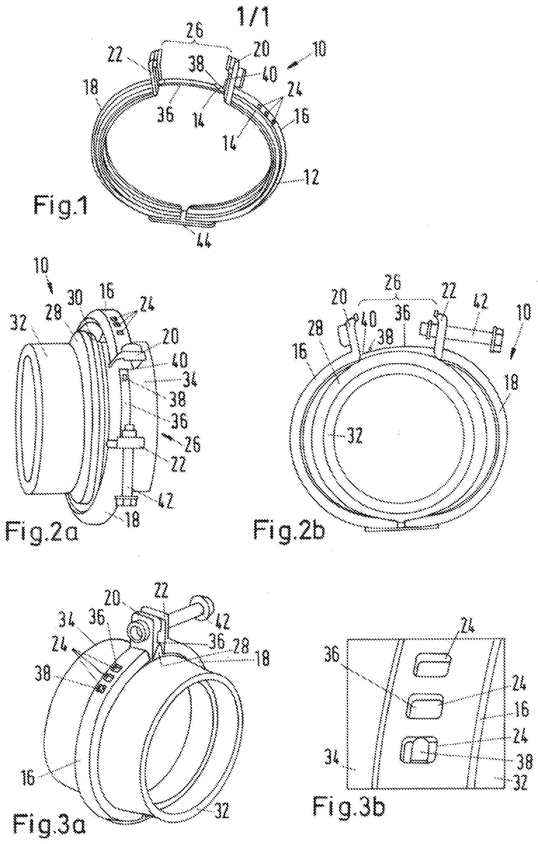

According to fig. 1, the entirety of the clamp for preassembling and connecting conduits having connector flanges has the reference sign 10.

The clamp 10 comprises a clamp band 12 and a preassembly device 14. The clamp band 12 is configured to extend around two flanges of conduits for connecting them. Furthermore, the clamp band 12 is configured to hold the two flanges in position when the clamp band 12 is in the preassembly state. The preassembly device 14 is configured to hold the clamp band 12 in position in the preassembly state such that the flanges cannot disconnect anymore.

The clamp band 12 comprises a first end portion 16 and a second end portion 18. A hinge 44 may connect the first end portion 16 and the second end portion 18. Thus, the first end portion 16 and the second end portion 80 may be moved in relation to each other such that they open or close the clamp 10. The clamp 10 may e.g., be a V-clamp.

The first end portion 16 comprises a first tightening head 20. The second end portion 18 comprises a second tightening head 22. The first and second tightening heads 20, 22 may be tightened to each other to tighten the clamp band 12 on connector flanges. When tightening the first tightening head 20 to the second tightening head 22, the clamp 10 is in the tightening state. When the first tightening head 20 and the second tightening head 22 are not tightened to each other and the clamp 10 is not preassembled on connector flanges, the clamp 10 is in the open state. In the open state, a gap 26 spaces apart the first tightening head 20 from the second tightening head 22.

The preassembly device 14 comprises a first locking member 24, an extension member 36 and a second locking member 38.

The first locking member 24 is arranged on and attached to the first end portion 16. The first locking member 24 comprises at least one hole. In the example of fig. 1, the first locking member 24 comprises three holes. Those three holes are arranged at different distances to the first tightening head 20. Furthermore, those holes may be arranged on a line along a circumferential direction of the clamp band 12. The distances of the holes may be assigned to different sizes of connector flanges. The hole having the closest distance to the first tightening head 20 may be assigned to fit the clamp band 12 to a greatest size of connector flanges. The hole having the greatest distance to the first tightening head 20 may be assigned to fit the clamp band 12 to a smallest size of connector flanges.

The extension member 36 is arranged in the gap 26. Furthermore, the extension member 36 may be attached to the second end portion 18 by e.g. riveting or welding. In the gap 26, the extension member 36 extends from the second end portion 18 towards the first end portion 16, bridging the gap 26 in the open state. The extension member 36 may bridge the gap 26 fully or partly. Furthermore, the extension member 36 may comprise a free end section 40, which may be the section of the extension member 36 being closest to the first end portion 16 in the open state. In the example of fig. 1, the extension member is a clip being made of an elastic material.

The second locking member 38 is arranged on the extension member 36. The second locking member 38 may be arranged on the free end section 40. Furthermore, the second locking member 38 is lockable to the first locking member 24 in a snap-fit manner. To provide that snap-fit function, the second locking member 38 comprises a hook. The hook may be formed such that it can hook into the hole of the first locking member 24, when the clamp 10 is opened.

Figures 2a and 2b show the clamp 10 in the open state that is arranged around connector flanges 28 and 30 of conduits 32 and 34. The connector flange 28 of conduit 32 and the connector flange 30 of conduit 34 are coupled to each other. The clamp 10 may be arranged around the connector flanges 30, 32 with the clamp band 12.

Fig. 2a shows a perspective side view on the coupled conduits 32 and 34. According to fig. 2a, a tensioning element 42 is provided at second tightening head 22. The tensioning element 42 can tighten the second tightening head 22 and the first tightening head 20 together, preferably once the clamp 10 is in the preassembly state. However, tightening of the first tightening head 20 and the second tightening head 22 by the tensioning element 42 can be performed independently of the state of the clamp 10.

In the open state shown in fig. 2a, the clamp 10 does not hold the connector flanges 28, 32 in position. Furthermore, in the example of fig. 2a, the extension member 36 only partly bridges the gap 26 between the first tightening head 20 and the second tightening head 22. The free end section 40 of the extension member 36 and does not contact the first tightening head 20, yet.

Fig. 2b shows a view from the front face of conduit 32. From this view, it is evident, that clamp 10 does not fix the connector flanges 28, 30 in position. Although there might be some contact between the clamp 10 and the connector flanges 28, 30, the clamp band 12 is not arranged closely enough to provide any fixing effect to the connector flanges 28, 32.

Figures 3a and 3b show the clamp 10 in the preassembly state on the conduits 32, 34.

For transitioning the clamp 10 from the open state to the preassembly state, the hook of the second locking member 38 at first contacts the first end portion 16 below the first tightening head 20. The clip of the extension member 36 will press the second locking member 38 to the inner side of the first end portion 16 or the clamp band 12, respectively, when further closing the clamp 10.

When the second locking member 38 reaches the position of the first hole of the first locking member 24, the second locking member 38 snaps into that hole of the first locking member 24. When further closing the clamp 10, the second locking member 38 detaches from that hole and moves to the second hole having a greater distance to the first tightening head 20 than the first hole. At the position of the second hole, the second locking member 38 snaps into the second hole of the first locking member 24. If the clamp 10 is then correctly preassembled on the flanges, the clamp 10 will be in the preassembly state. The second locking member 38 holds the clamp 10 in the preassembly position. In the preassembly position, the flanges cannot detach since the clamp band 12 holds them in position.

According to fig. 3a, the clamp band 12 is arranged snugly around the connector flanges 28, 30 of conduit 32 and 34. The second locking member 28 is snap fitted in the third hole of the first locking member 24. Thus, the positions of the first and second tightening heads 20, 22 and of the clamp band 12 are fixed. Since the clamp band 12 holds the connector flanges 28, 30 in position, the position of the connector flanges 28, 30 is also fixed.

As can be seen from fig. 3a, the tensioning element 42 has not been activated, yet. The tensioning element 42 is still completely arranged on the second tightening head 22 without tightening it to the first tightening head 20. For tightening the tensioning element 32, the tensioning element 42 can be screwed through the second tightening head 22 and connect to first tightening head 20. Thus, the first tightening head 20 and the second tightening head 22 are not tightened together the preassembly state.

Fig. 3b shows a detail view of the first locking member 24 at the first end portion 16. As can be seen, the hook of the second locking member 38 is snap fitted into the third hole of the first locking member 24. This means, the clamp 10 cannot transition into the open state unless the hook of the second locking member 38 is unlocked from the first locking member 24. Thus, in a direction of the first tightening head 20, the second locking member 38 is immovably fixed on the first locking member 24. However, the second locking member 38 may still move in a direction away from the first tightening head 20 along the clamp band 12 since in this direction the hook of the second locking member 38 is movable and may detach from the hole. The preassembly device 14 therefore holds the clamp 10 in the preassembly state without any further action of an operator.

If the clamp 10 needs to be removed from the preassembly state, the second locking member 38 can be pressed in radial direction. The second locking member 38 may then be released from the first locking member 24 such that the clamp 10 can be opened from the preassembly state. The clamp 10 can then re-transition to the open state.

An operator requires just one hand for arranging the clamp 10 around the connector flanges 28, 30. Furthermore, the operator just needs one hand to close the clamp 10 such that the clamp band 12 is snugly arranged around the connector flanges 28. For closing the clamp 10, the operator just needs to push the first end portion 16 and the second end portion 18 together. This will also reduce the gap 26 between the first tightening head 20 and the second tightening head 22. At the same time, closing the clamp 10 will move the second locking member 38 towards the first locking member 24 such that the second locking member 38 may be locked to the first locking member 24.

Consequently, the operator may bring the clamp 10 into the preassembly state by using only one hand. The operator may use the other hand for e.g., holding the conduits 28, 30 in position while arranging the clamp band 12 around the connector flanges 32, 34 and while closing the clamp 10.

In the preassembly state, the clamp 10 holds the connector flanges 28, 30 and the conduits 32, 34 in position, i.e. the connector flanges 28, 30 cannot detach anymore. Therefore, the operator does not need to hold them in position. Thus, the operator may use both hands for tightening the clamp 10 by using the tensioning element 42.

The invention is not limited to one of the embodiments described above, but can be modified in many ways within the scope of the invention, which is defined by the appended claims.

### Reference Signs List

- 10: clamp
- 12: clamp band
- 14: preassembly device
- 16: first end portion
- 18: second end portion
- 20: first tightening head
- 22: second tightening head
- 24: first locking member
- 26: gap
- 28: connector flange
- 30: connector flange
- 32: conduit
- 34: conduit
- 36: extension member
- 38: second locking member
- 40: free end section
- 42: tensioning element
- 44: hinge

## Claims

1. Clamp for preassembling and connecting conduits (32, 34) having connector flanges (28, 30), the clamp (10) comprising: a clamp band (12) and a preassembly device (14); the clamp band (12) comprising a first end portion (16) with a first tightening head (20) and a second end portion (18) with a second tightening head (22); the preassembly device (14) comprising a first locking member (24) at the first end portion (16); wherein, in an open state of the clamp (10), the first tightening head (20) and the second tightening head (22) are spaced apart from each other by a gap (26), and in a preassembly state of the clamp (10), the first tightening head (20) and the second tightening head (22) are arranged closer to each other than in the open state and the clamp (10) is configured to hold two connector flanges (28, 30) of conduits (32, 34) in position to each other; wherein the preassembly device (14) further comprises an extension member (36) with a second locking member (38) being lockable to the first locking member (24) in a snap-fit manner; wherein in the open state, the second locking member (38) is unlocked from the first locking member (24), and in the preassembly state, the second locking member (38) is fixed on the first locking member (24) and locks the clamp (10) in the preassembly state, **characterized in that** the second locking member (38) comprises a hook and the first locking member (24) comprises at least one hole at the first end portion (16), wherein in the preassembly state, the hook is hookable at the hole in a snap-fit manner.

2. Clamp according to claim 1, **characterized in that** the extension member (36) at least partly bridges the gap (26) from the second end portion (18) towards the first end portion (16).

3. Clamp according to claim 1 or 2, **characterized in that** the extension member (36) comprises a clip.

4. Clamp according to claim 3, **characterized in that** the second locking member (38) is arranged on a free end section (40) of the clip.

5. Clamp according to one of claims 1 to 4, **characterized in that**, in the preassembly state, the second locking member (38) is immovably fixed to the first locking member (24) in a direction of the first tightening head (20).

6. Clamp according to claim 1, **characterized in that** the first locking member (24) comprises a plurality of holes being arranged on the first end portion (16) at different distances to the first tightening head (20).

7. Clamp according to one of claims 1 to 6, **characterized in that** in the open state the first locking member (24) is spaced apart from the second locking member (38).

8. Clamp according to one of claims 1 to 7, **characterized in that** the clamp (10) is a V-clamp.

9. Clamp according to one of claims 1 to 8, **characterized in that** the extension member (36) is fixed to the second end portion (18) by welding or riveting.

10. Clamp according to one of claims 1 to 9, **characterized in that** the clamp (10) further comprises a tightening state in which the first tightening head (20) is tightened to the second tightening head (22) by a tensioning element (42).

## Patentansprüche

1. Klemme zum Vormontieren und Verbinden von Leitungen (32, 34) mit Verbinderflanschen (28, 30), wobei die Klemme (10) Folgendes umfasst: ein Klemmband (12) und eine Vormontagevorrichtung (14); wobei das Klemmband (12) einen ersten Endabschnitt (16) mit einem ersten Spannkopf (20) und einen zweiten Endabschnitt (18) mit einem zweiten Spannkopf (22) umfasst; wobei die Vormontagevorrichtung (14) einen ersten Verriegelungsabschnitt (24) am ersten Endabschnitt (16) umfasst; wobei in einem offenen Zustand der Klemme (10) der erste Spannkopf (20) und der zweite Spannkopf (22) durch einen Spalt (26) voneinander beabstandet sind und in einem Vormontagezustand der Klemme (10) der erste Spannkopf (20) und der zweite Spannkopf (22) näher aneinander angeordnet sind als in dem offenen Zustand und die Klemme (10) dazu ausgelegt ist, zwei Verbinderflansche (28, 30) von Leitungen (32, 34) in Position zueinander zu halten; wobei die Vormontagevorrichtung (14) ferner ein Verlängerungselement (36) mit einem zweiten Verriegelungselement (38) umfasst, das mit dem ersten Verriegelungselement (24) einrastend verriegelbar ist; wobei in dem offenen Zustand das zweite Verriegelungselement (38) von dem ersten Verriegelungselement (24) entriegelt ist und in dem Vormontagezustand das zweite Verriegelungselement (38) an dem ersten Verriegelungselement (24) fixiert ist und die Klemme (10) in dem Vormontagezustand verriegelt, **dadurch gekennzeichnet, dass** das zweite Verriegelungselement (38) einen Haken umfasst und das erste Verriegelungselement (24) mindestens ein Loch an dem ersten Endabschnitt (16) umfasst, wobei der Haken in dem Vormontagezustand an dem Loch einrastend einhakbar ist.

2. Klemme nach Anspruch 1, **dadurch gekennzeichnet, dass** das Verlängerungselement (36) den Spalt (26) vom zweiten Endabschnitt (18) zum ersten Endabschnitt (16) hin zumindest teilweise überbrückt.

3. Klemme nach Anspruch 1 oder 2, **dadurch gekennzeichnet, dass** das Verlängerungselement (36) eine Klammer umfasst.

4. Klemme nach Anspruch 3, **dadurch gekennzeichnet, dass** das zweite Verriegelungselement (38) an einem freien Endabschnitt (40) der Klammer angeordnet ist.

5. Klemme nach einem der Ansprüche 1 bis 4, **dadurch gekennzeichnet, dass** das zweite Verriegelungselement (38) im Vormontagezustand in Richtung des ersten Spannkopfes (20) unbeweglich am ersten Verriegelungselement (24) fixiert ist.

6. Klemme nach Anspruch 1, **dadurch gekennzeichnet, dass** das erste Verriegelungselement (24) mehrere Löcher umfasst, die in unterschiedlichen Abständen zum ersten Spannkopf (20) am ersten Endabschnitt (16) angeordnet sind.

7. Klemme nach einem der Ansprüche 1 bis 6, **dadurch gekennzeichnet, dass** das erste Verriegelungselement (24) im geöffneten Zustand von dem zweiten Verriegelungselement (38) beabstandet ist.

8. Klemme nach einem der Ansprüche 1 bis 7, **dadurch gekennzeichnet, dass** die Klemme (10) eine V-Klemme ist.

9. Klemme nach einem der Ansprüche 1 bis 8, **dadurch gekennzeichnet, dass** das Verlängerungselement (36) durch Schweißen oder Nieten am zweiten Endabschnitt (18) fixiert ist.

10. Klemme nach einem der Ansprüche 1 bis 9, **dadurch gekennzeichnet, dass** die Klemme (10) ferner einen Spannzustand umfasst, in dem der erste Spannkopf (20) über ein Spannelement (42) am zweiten Spannkopf (22) angezogen wird.

## Revendications

1. Collier de serrage de pré-assemblage et de raccordement de conduits (32, 34) à brides de raccordement (28, 30), le collier de serrage (10) comprenant : une bande de serrage (12) et un dispositif de pré-assemblage (14) ; la bande de serrage (12) comprenant une première partie d'extrémité (16) dotée d'une première tête de serrage (20) et une seconde partie d'extrémité (18) dotée d'une seconde tête de serrage (22) ; le dispositif de pré-assemblage (14) comprenant un premier élément de verrouillage (24) au niveau de la première partie d'extrémité (16) ; dans un état ouvert du collier de serrage (10), la première tête de serrage (20) et la seconde tête de serrage (22) étant espacées l'une de l'autre par un espace (26), et dans un état de pré-assemblage du collier de serrage (10), la première tête de serrage (20) et la seconde tête de serrage (22) étant disposées plus près l'une de l'autre que dans l'état ouvert et le collier de serrage (10) étant conçu pour maintenir deux brides de raccordement (28, 30) de conduits (32, 34) en position l'une par rapport à l'autre ; le dispositif de pré-assemblage (14) comprenant en outre un élément d'extension (36) doté d'un second élément de verrouillage (38) pouvant être verrouillé par encliquetage sur le premier élément de verrouillage (24) ; dans l'état ouvert, le second élément de verrouillage (38) étant déverrouillé du premier élément de verrouillage (24), et dans l'état de pré-assemblage, le second élément de verrouillage (38) étant fixé sur le premier élément de verrouillage (24) et verrouillant le collier de serrage (10) dans l'état de pré-assemblage, **caractérisé en ce que** le second élément de verrouillage (38) comprend un crochet et le premier élément de verrouillage (24) comprend au moins un trou au niveau de la première partie d'extrémité (16), dans l'état de pré-assemblage, le crochet pouvant être accroché au trou par encliquetage.

2. Collier de serrage selon la revendication 1, **caractérisé en ce que** l'élément d'extension (36) assure au moins partiellement un pont sur l'espace (26) de la seconde partie d'extrémité (18) à la première partie d'extrémité (16).

3. Collier de serrage selon la revendication 1 ou 2, **caractérisé en ce que** l'élément d'extension (36) comprend une agrafe.

4. Collier de serrage selon la revendication 3, **caractérisé en ce que** le second élément de verrouillage (38) est disposé sur une section d'extrémité libre (40) du collier de serrage.

5. Collier de serrage selon l'une des revendications 1 à 4, **caractérisé en ce que**, dans l'état de pré-assemblage, le second élément de verrouillage (38) est fixé de manière fixe sur le premier élément de verrouillage (24) dans une direction de la première tête de serrage (20).

6. Collier de serrage selon la revendication 1, **caractérisé en ce que** le premier élément de verrouillage (24) comprend une pluralité de trous disposés sur la première partie d'extrémité (16) à des distances différentes de la première tête de serrage (20).

7. Collier de serrage selon l'une des revendications 1 à 6, **caractérisé en ce que**, dans l'état ouvert, le premier élément de verrouillage (24) est espacé du second élément de verrouillage (38).

8. Collier de serrage selon l'une des revendications 1 à 7, **caractérisé en ce que** le collier de serrage (10) est un collier de serrage en V.

9. Collier de serrage selon l'une des revendications 1 à 8, **caractérisé en ce que** l'élément d'extension (36) est fixé à la seconde partie d'extrémité (18) par soudage ou rivetage.

10. Collier de serrage selon l'une des revendications 1 à 9, **caractérisé en ce que** le collier de serrage (10) présente en outre un état de serrage dans lequel la première tête de serrage (20) est serrée sur la seconde tête de serrage (22) par un élément de tension (42).
